# EUROPÄISCHE PATENTSCHRIFT

(11) **EP 0 582 237 B1**
(45) Veröffentlichungstag und Bekanntmachung des Hinweises auf die Patenterteilung: **27.12.1995**
(21) Anmeldenummer: 93112303.8
(22) Anmeldetag: 31.07.1993
(51) Int. Cl.: C02F 3/12, C02F 3/34

(54) **Verfahren zur Behandlung von Öl-Wasser-Emulsionen, insbesondere aus Autowaschanlagen**
Process for treating oil-water emulsions, especially from vehicle washing installations
Procédé pour le traitement d'émulsions huile-eau, provenant particulièrement des installations de lavages de véhicules

(30) Priorität: 06.08.1992 DE 4225967
(43) Veröffentlichungstag der Anmeldung: 09.02.1994
(73) Patentinhaber: Dyckerhoff & Widmann Aktiengesellschaft, D-81902 München (DE)
(72) Erfinder:
(74) Vertreter: Patentanwälte Möll und Bitterich

(56) Entgegenhaltungen:
- EP-A- 0 022 120
- EP-A- 0 436 090
- EP-A- 0 481 963
- DE-A- 2 535 803
- FR-A- 2 276 268
- US-A- 4 816 158

## Beschreibung

Die Erfindung bezieht sich auf ein Verfahren zur Behandlung von Öl-Wasser-Emulsionen gemäß dem Oberbegriff des Patentanspruchs 1.

Öl-Wasser-Emulsionen bzw. emulsionshaltige Abwässer fallen in großen Mengen vor allem in der metallbearbeitenden Industrie, aber auch in Autowaschanlagen an. Bei Öl-Wasser-Emulsionen ist das Öl (disperse Phase) in kugelförmigen, feinen Tröpfchen im Wasser (kontinuierliche Phase) dispergiert. Öl-Wasser-Emulsionen dürfen nicht ohne Behandlung in die Kanalisation oder den Vorfluter eingeleitet werden; es muß vielmehr vor dem Einleiten die disperse Phase aus der kontinuierlichen Phase abgespalten bzw. ihr Anteil darin unter die zulässigen Grenzwerte reduziert werden.

Öl-Wasser-Emulsionen befinden sich meist nicht im Gleichgewichtszustand; sie haben das Bestreben, wieder in zwei getrennte Phasen zu zerfallen. Um dies zu verhindern bzw. zur Herstellung stabiler Emulsionen enthalten sie meist Emulgatoren, Abwässer von Autowaschanlagen auch Tenside. Emulsionshaltige Abwässer können deshalb in der Regel nur gespalten werden, indem die stabilisierende Wirkung der Emulgatoren aufgehoben und die Emulsion in ihren instabilen Zustand rückgeführt wird. Dazu steht eine Anzahl von Verfahren zur Verfügung, die mit mehr oder minder großem Erfolg in der Praxis eingesetzt werden.

Unter den mechanischen Spaltverfahren kennt man neben der Schwerkraftabscheidung durch Ausnutzen der unterschiedlichen Dichte von Öl und Wasser in sogenannten Koaleszenzabscheidern mit platten- oder mattenförmigen Koaleszenzelementen auch die Ultrafiltration mittels wasserdurchlässiger, meist organischer Membranen, welche das Öl zurückhalten sowie die Verwendung saugfähiger, feinporiger Adsorptionsmittel. Abgesehen von dem nicht immer befriedigenden Wirkungsgrad solcher mechanischer Spaltverfahren besteht ein wesentlicher Nachteil darin, daß das abgeschiedene Öl als Altöl aufbereitet bzw. teilweise oder ganz entsorgt werden muß, bzw. daß die zur Abscheidung des Öls benutzten und damit verschmutzten Hilfsmittel, wie z. B. Filter, entsorgt werden müssen.

Neben diesen mechanischen sind auch chemische Spaltverfahren bekannt, bei denen meist Fällungs- oder Flockungsmittel zugegeben werden, um eine Destabilisierung der Öl-Wasser-Emulsion zu erreichen. Daneben ist auch eine biologische Reinigung ölhaltiger Abwässer in sogenannten Belebtschlammbecken möglich. Da der aerobe bakterielle Abbau von Kohlenwasserstoffen aber sehr langsam verläuft, ist eine sehr hohe Verweilzeit der Emulsionen in den Reaktionsbehältern erforderlich. In den Emulsionen enthaltene chlorkohlenwasserstoffhaltige Lösungsmittel, auch Tenside, Kaltreiniger usw., können den biologischen Abbau durch Mikroorganismen zusätzlich verlangsamen oder sogar zum Erliegen bringen.

Vor allem bei Autowaschanlagen kommt als weiteres Problem hinzu, daß entsprechend dem oft stark schwankenden Anfall von Waschwasser weder ein kontinuierlicher Betrieb gewährleistet, noch sichergestellt werden kann, daß die für den Abbau der Kohlenwasserstoffe verantwortlichen Mikroorganismen jederzeit in optimaler Weise ernährt werden.

Der Erfindung liegt so die Aufgabe zugrunde, eine Möglichkeit zu schaffen, um Öl-Wasser-Emulsionen und emulsionshaltige Abwässer, insbesondere Abwässer von Autowaschanlagen, so behandeln zu können, daß auf möglichst einfache und rasche Weise und bei einem Minimum an baulichem Aufwand und an zu entsorgenden Stoffen eine zuverlässige und möglichst weitgehende Trennung der dispersen von der kontinuierlichen Phase erreichbar wird.

Gemäß der Erfindung wird diese Aufgabe durch die im kennzeichnenden Teil des Patentanspruchs 1 angegebenen Merkmale gelöst.

Die Erfindung greift dabei zurück auf das in der biologischen Abwasserreinigung bekannte SBR-("Sequencing-Batch-Reactor") Verfahren (EP 0 481 963 A2). Dieses Verfahren zeichnet sich dadurch aus, daß die einzelnen Verfahrensschritte, also die Stufen der biologischen Reinigung sowie die Nachklärung nacheinander im selben Behälter ablaufen, also nicht räumlich voneinander getrennt sind. Das Prinzip des SBR-Verfahrens ist die zeitliche Aufeinanderfolge ("Sequence") folgender Prozeßphasen:
1. Füllen des Reaktors mit Abwasser;
2. Belüften und Mischen des Abwassers z.B. durch Rühren;
3. Absetzen der Schlammflocken;
4. Abziehen von gereinigtem Wasser und Überschußschlamm;
5. Warten auf eine neue Füllung.

Für das SBR-Verfahren ist die Aufrechterhaltung eines leistungsfähigen Bestandes an Mikroorganismen unerläßlich. Dies wird durch ein vielseitiges Angebot an organischen und anorganischen Bestandteilen erreicht, wie es in kommunalem Abwasser üblicherweise gegeben ist. Zur Aufnahme des bei kommunalem Abwasser in der Regel kontinuierlichen Zulaufs zur Kläranlage (Trockenwetterabfluß) ist es erforderlich, ein Speicherbecken vorzuschalten, aus dem die meist mehreren, zeitversetzt betriebenen Reaktoren diskontinuierlich befüllt werden.

Der Grundgedanke der Erfindung, die Verwendung des SBR-Verfahrens zur Spaltung von Öl-Wasser-Emulsionen, beruht auf der Überlegung, daß die maßgeblichen biologischen Prozesse in einem Behälter, dem Reaktor, ablaufen und deshalb verhältnismäßig leicht überwacht und beeinflußt werden können. So kann die bei Öl-Wasser-Emulsionen zu befürchtende einseitige Ernährung der Mikroorganismen dadurch eliminiert werden, daß die Mikroorganismen eine Zusatznahrung aus Phosphor und Stickstoff erhalten. Dem bei Autowaschanlagen oft sehr unregelmäßigen Zufluß kann gemäß dem erfindungsgemäßen Verfahren dadurch begegnet werden, daß die Mikroorganismen in Zeiten ohne ausreichenden Abwasserzufluß eine Ersatznahrung in Form einer künstlich aufbereiteten Öl-Wasser-Emulsion erhalten. Diese kann in Zeiten ohne Emulsionszufluß durch Verwendung von gereinigtem Wasser aus der Anlage selbst oder Frischwasser und Altöl, gegebenenfalls auch unter Verwendung von in einem Vorabscheider abgeschiedener Leichtflüssigkeit erfolgen, die als Emulsion aufbereitet werden.

Vorteilhafte Weiterbildungen ergeben sich aus den Unteransprüchen.

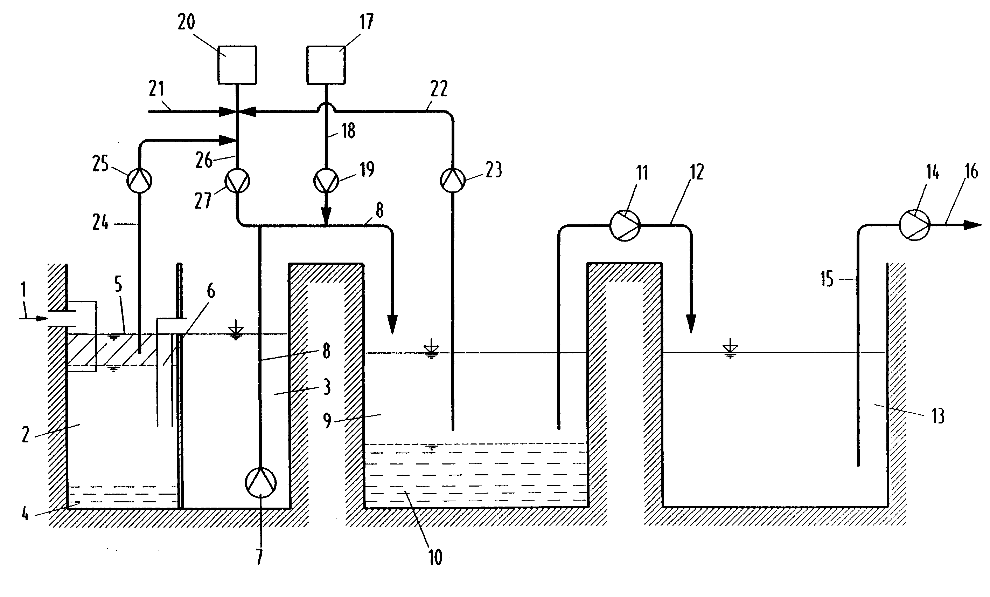

Die Erfindung wird nachstehend anhand eines in der Zeichnung dargestellten Auführungsbeispiels für eine Anlage zur Durchführung des erfindungsgemäßen Verfahrens näher erläutert.

In der Zeichnung ist schematisch eine Anlage zur Durchführung des erfindungsgemäßen Verfahrens dargestellt. Dem Verfahrensablauf folgend gelangt die Öl-Wasser-Emulsion oder das emulsionshaltige Abwasser z. B. aus einer Autowaschanlage über einen Zulauf 1 zunächst in einen Vorabscheider 2 mit integriertem Pufferbecken 3. Der Vorabscheider 2 dient zur Eliminierung von Sinkstoffen 4 und frei abscheidbarer Leichtflüssigkeit 5. über ein Tauchrohr 6 gelangt das von Sinkstoffen und frei abscheidbarer Leichtflüssigkeit befreite Abwasser aus dem Vorabscheiderraum 2 in das Pufferbecken 3.

Aus dem Pufferbecken 3 wird das Abwasser zeit- bzw. niveaugesteuert mittels einer Tauchpumpe 7 über eine Zuführungsleitung 8 in den SBR-Reaktor 9 gepumpt, in dem es nach dem SBR-Verfahren biologisch behandelt wird. Diese Behandlung besteht aus einer zeitlichen Aufeinanderfolge von mehreren Prozeßphasen, nämlich Füllen des Reaktors 9, Belüften und Mischen z. B. durch Rührwerke oder dergleichen der Emulsion sowie Absetzen der Biomasse 10 in einer anschließenden Ruhephase. Nach der biologischen Behandlung einer Charge, d. h. nach dem Absetzen der Biomasse, kann das überstehende Klarwasser mittels einer Pumpe 11 über eine Leitung 12 in ein Wasserrückgewinnungsbecken 13 gepumpt werden. Von dem Wasserrückgewinnungsbecken 13 aus kann mittels einer Pumpe 14 über eine Leitung 15 eine zu einem Verbraucher führende Leitung 16 bedient werden.

Um bei einseitig zusammengesetztem Abwasser einen optimalen biologischen Abbau zu erzielen, können dem Abwasser in der Zulaufleitung 8 zum Reaktor 9 aus einem Behälter 17 über eine Leitung 18 und eine Pumpe 19, zweckmäßig eine Kreiselpumpe, Nährsalze, in erster Linie Stickstoff und Phosphat als Zusatznahrung zugegeben werden.

Falls längere Zeit kein Abwasser zur Verfügung steht, ist in die Anlage eine Notversorgung der Mikroorganismen mit einer Ersatznahrung integriert. Hierzu ist ein Behälter 20 vorgesehen, in dem sich als Ersatznahrung Kohlenstoff enthaltende Stoffe, wie z.B. Öl, Altöl oder dergleichen befinden, die mit Wasser zu einer Emulsion aufbereitet werden können, um den Mikroorganismen als Nahrung zu dienen. Diese als Ersatznahrung dienende Emulsion kann entweder mit Frischwasser gebildet werden, das über eine Leitung 21 zugeführt werden kann, oder mit gereinigtem Abwasser, das über eine Leitung 22 zugeführt wird, in die eine Pumpe 23 geschaltet ist. Als Kohlenstoffquelle kann auch die abgeschiedene Leichtflüssigkeit 5 aus dem Vorabscheider 2 verwendet werden, die über eine Leitung 24 mit einer Pumpe 25 gefördert wird. Die Zugabe auch dieser Ersatznahrung erfolgt über eine Leitung 26 mit einer Pumpe 27. Durch den mechanischen Energieeintrag der Pumpe 27, die eine Kreiselpumpe sein sollte, wird eine Dispergierung des öls im Wasser erreicht, die den biologischen Abbau durch die Mikroorganismen erleichtert.

Die Steuerung des gesamten Verfahrens kann weitgehend automatisch erfolgen, wobei die Menge des über den Zulauf 1 zulaufenden Abwassers durch Sensoren und die Belastung durch on-line-Messung des gesamten organisch gebundenen Kohlenstoffs (TOC = "total organic carbon"), des biologischen Sauerstoffbedarfs (BSB), und/oder der Kohlenwasserstoffkonzentration usw. bestimmt werden. Die Steuerung des Verfahrens kann dahingehend ausgebaut werden, daß in Abhängigkeit der Abwasserbelastung sowohl die Zugabe von Nährsalzen als Zusatznahrung, als auch die Zugabe einer Ergänzungsnahrung mit Kohlenstoff und einer Ersatznahrung weitgehend selbsttätig erfolgen.

## Patentansprüche

1. Verfahren zur Behandlung von öl-Wasser-Emulsionen, insbesondere aus Autowaschanlagen, aus der metallbearbeitenden Industrie oder dergleichen, dadurch gekennzeichnet, daß die Emulsion gegebenenfalls nach Eliminierung von Sinkstoffen (4) und frei abscheidbarer Leichtflüssigkeit (5) in einem als Vorabscheider ausgebildeten Pufferbecken (2) einer sequenziellen biologischen Reinigung durch Mikroorganismen in einem Behälter (9) mit Füll-, Misch- und Belüftungsphasen (SBR-Verfahren) derart unterzogen wird, daß unabhängig vom Zufluß der Emulsion zu dem dem Behälter (9) vorgeschalteten Pufferbecken (2) die Beschickung des Behälters (9) und die Konzentration der Emulsion möglichst konstant und in einer für die Ernährung der Mikroorganismen möglichst günstigen Zusammensetzung gehalten werden.

2. Verfahren nach Anspruch 1, dadurch gekennzeichnet, daß der Emulsion als Zusatznahrung vornehmlich Stickstoff und/oder Phosphate enthaltende Nährsalze zugegeben werden.

3. Verfahren nach Anspruch 1 oder 2, dadurch gekennzeichnet, daß der Emulsion als Ergänzungsnahrung Kohlenstoff enthaltende Stoffe zugegeben werden.

4. Verfahren nach einem der Ansprüche 1 bis 3, dadurch gekennzeichnet, daß bei unregelmäßigem Emulsionszufluß der Reaktor mit einer Ersatznahrung für die Mikroorganismen aus Wasser und Kohlenstoff enthaltenden Stoffen beschickt wird.

5. Verfahren nach Anspruch 4, dadurch gekennzeichnet, daß die Ersatznahrung als Emulsion aufbereitet wird.

6. Verfahren nach Anspruch 3 oder 4, dadurch gekennzeichnet, daß als kontinuierliche Phase für die Bildung der Emulsion gereinigtes Abwasser im Kreislauf geführt wird.

7. Verfahren nach Anspruch 3 oder 4, dadurch gekennzeichnet, daß als Kohlenstoff enthaltende Stoffe Altöl, ölhaltiges Abwasser oder abgeschiedene Leichtflüssigkeit aus dem Vorabscheider verwendet werden.

8. Verfahren nach einem der Ansprüche 1 bis 7, dadurch gekennzeichnet, daß die Zusatznahrung und/oder die Ergänzungsnahrung und/oder die Ersatznahrung mittels der Zulaufleitung (8) zugegeben werden.

9. Verfahren nach Anspruch 8, dadurch gekennzeichnet, daß die Zudosierung vor einer in die Zulaufleitung (8) geschalteten Kreiselpumpe (25) erfolgt.

10. Verfahren nach einem der Ansprüche 1 bis 9, dadurch gekennzeichnet, daß zur Bemessung der Dosierung von Zusatz-, Ergänzungs- und/oder Ersatznahrung laufend der biologische Sauerstoffbedarf (BSB), die Kohlenwasserstoffkonzentration und der gesamte organisch gebundene Kohlenstoff (TOC) sowie die Wassermenge im Zulauf (1) gemessen werden.

## Claims

1. A process for the treatment of oil-water emulsions, in particular from car-wash installations, from the metal-working industry or the like, characterised in that, optionally after the elimination of settleable material (4) and freely separable light fluid, the emulsion undergoes in a buffer tank (2) in the form of a presettling tank a sequential biological purification by microorganisms in a container (9) with filling, mixing and aeration stages (SBR process) in such a way that, independently of the inflow of emulsion to the buffer tank (2) connected upstream of the container (9), the feed to the container (9) and the concentration of the emulsion is maintained as constant as possible and in a composition which is as favourable as possible for the nutrition of the microorganisms.

2. A process according to Claim 1, characterised in that nutrient salts especially containing nitrogen and/or phosphates are added to the emulsion as additional nutriment.

3. A process according to Claim 1 or 2, characterised in that substances containing carbon are added to the emulsion as supplementary nutriment.

4. A process according to any one of Claims 1 to 3, characterised in that with an irregular inflow of emulsion the reactor is fed with a replacement nutriment for the microorganisms consisting of substances containing water and carbon.

5. A process according to Claim 4, characterised in that the replacement nutriment is prepared as an emulsion.

6. A process according to Claim 3 or 4, characterised in that purified waste water is conveyed in the circuit as a continuous phase for the formation of the emulsion.

7. A process according to Claim 3 or 4, characterised in that used oil, waste water containing oil or light fluid separated from the presettling tank are used as substances containing carbon.

8. A process according to any one of Claims 1 to 7, characterised in that the additional nutriment and/or the supplementary nutriment and/or the replacement nutriment are added by means of the inlet duct (8).

9. A process according to Claim 8, characterised in that the metering-out takes place upstream of a centrifugal pump (25) connected into the inlet duct (8).

10. A process according to any one of Claims 1 to 9, characterised in that with a view to determining the metering of additional, replacement and/or supplementary nutriment the biological oxygen demand (BOD), the hydrocarbon concentration and the total organically bound carbon (TOC), as well as the amount of water are measured in the inlet (1).

## Revendications

1. Procédé pour le traitement d'émulsions eau-huile, en particulier provenant des installations de lavage de véhicules, de l'industrie de traitement des métaux ou analogues, caractérisé en ce que l'émulsion est soumise, le cas échéant après élimination de matières en suspension (4) et du liquide léger (5) facilement séparable, dans un bassin tampon (2) réalisé pour faire office de préséparateur, à une épuration biologique séquentielle au moyen de micro-organismes dans un récipient (9), avec des phases de remplissage, de mélange et d'aération (procédé SBR), de manière qu'indépendamment de l'apport d'émulsion au bassin tampon (2) mis en circuit en amont du récipient (9), le garnissage du récipient (9) et la concentration d'émulsion soient aussi constants que possible et maintenus dans une composition aussi avantageuse que possible que pour la nutrition des micro-organismes.

2. Procédé selon la revendication 1, caractérisé en ce que l'on ajoute à l'émulsion, à titre de nourriture additionnelle, des sels nutritifs contenant de préférence de l'azote et/ou des phosphates.

3. Procédé selon la revendication 2, caractérisé en ce que l'on ajoute à l'émulsion, à titre de complément nutritif, des substances contenant du carbone.

4. Procédé selon l'une des revendications 1 à 3, caractérisé en ce qu'en cas d'apport irrégulier d'émulsion, le réacteur est alimenté avec un substitut nutritif pour les micro-organismes, constitué d'eau et de substances contenant du carbone.

5. Procédé selon la revendication 4, caractérisé en ce que le substitut nutritif est préparé sous forme d'émulsion.

6. Procédé selon la revendication 3 ou 4, caractérisé en ce que l'on fait passer en circuit fermé des eaux épurées, comme phase continue pour la formation de l'émulsion.

7. Procédé selon la revendication 3 ou 4, caractérisé en ce que l'on utilise comme substance contenant du carbone de vieilles huiles, des eaux usées contenant de l'huile, ou un liquide léger ayant été séparé et venant du préséparateur.

8. Procédé selon l'une des revendications 1 à 7, caractérisé en ce que l'additif nutritif et/ou le complément nutritif et/ou le substitut nutritif sont ajoutés au moyen de la conduite d'alimentation (8).

9. Procédé selon la revendication 8, caractérisé en ce que l'adjonction dosée s'effectue depuis une pompe centrifuge (25) mise en circuit dans la conduite d'alimentation (8).

10. Procédé selon l'une des revendications 1 à 9, caractérisé en ce que, pour mesurer le dosage de l'additif du complément nutritif et/ou du substitut nutritif, on mesure en continu la demande en oxygène biologique (DBO), la concentration en hydrocarbures et la teneur totale organique liée (TOC) ainsi que la quantité d'eau en circulation (1).
